# FASCICULE DE BREVET EUROPEEN

(11) **EP 0 845 405 B1**
(45) Date de publication et mention de la délivrance du brevet: **22.08.2001**
(21) Numéro de dépôt: 97402802.9
(22) Date de dépôt: 21.11.1997
(51) Int. Cl.: B62D 25/08, B62D 29/00, B62D 25/14

(54) **Traverse de châssis de véhicule automobile**
Chassisquerträger für Kraftfahrzeuge
Transverse member for the chassis of a motor car

(30) Priorité: 29.11.1996 FR 9614642
(43) Date de publication de la demande: 03.06.1998
(73) Titulaire: RENAULT, 92109 Boulogne-Billancourt (FR); MATRA AUTOMOBILES SA, 78191 Trappes Cédex (FR)
(72) Inventeur: Demaldent, Jean-Michel, 78580 Maule (FR); Gros, Christian, 78400 - Chatou (FR)
(74) Mandataire: Fernandez, Francis Lionel

(56) Documents cités:
- EP-A- 0 327 415
- EP-A- 0 454 942
- FR-A- 2 702 726

## Description

L'invention concerne une traverse de châssis de véhicule automobile qui limite longitudinalement un compartiment moteur et qui est formée par une poutre transversale supérieure et par une poutre transversale inférieure respectivement reliées à deux longerons porteurs des zones d'appui des passages de roues.

La publication FR-A-2503652, représentant le préambule de la revendication 1, décrit une traverse d'extrémité de carrosserie qui permet le montage d'un pare-chocs. Dans cette réalisation la traverse transmet des efforts de compression aux longerons. Toutefois lorsque le motopropulseur est disposé à l'avant du véhicule, le recul accidentel de celui-ci lors des collisions n'est plus limité longitudinalement.

La déformation concomitante du tablier n'est pas sans risques pour le passager et/ou du conducteur du véhicule.

La publication FR-A-1296074 décrit un cadre rigide et un plancher de véhicule limité par le contour intérieur de ce cadre.

Le cadre est dans ce cas constitué par des longerons et par des traverses parmi lesquelles la traverse antérieure est constituée par un ou plusieurs éléments assemblés en métal ou alliage léger.

On constate que le tronçon avant des longerons orienté d'avant en arrière est souvent coudé vers le bas dans la zone du tablier pour se prolonger vers l'arrière dans la zone du plancher du véhicule. Chaque longeron présente alors dans la zone de son coude un grand moment de flexion qui ne peut être compensé aisément sans une structure de châssis adaptée. Lorsqu'un effort longitudinal s'exerce sur ce longeron, le plancher a une tendance à fléchir en absorbant une partie négligeable de l'énergie due aux chocs.

On sait par ailleurs que la sécurité des occupants du véhicule est sensiblement améliorée par l'agencement de parois transversales résistantes aux efforts longitudinaux.

L'invention a donc pour objet une traverse de châssis réalisée de manière à ce que les forces s'exerçant dans le sens longitudinal, par exemple en cas de choc accidentel à l'avant, soient absorbées sans risquer une déformation du plancher du véhicule.

L'invention a encore pour objet une traverse de châssis en deux parties assemblées de manière favorable, d'un poids aussi faible que possible, dans le but de maintenir l'efficacité de la traverse en fonction des masses rendues mobiles lors des collisions et susceptibles de générer des efforts de déformation sur le tablier.

Selon l'invention, la paroi avant de la poutre inférieure de la traverse, délimite avec une paroi de guidage et une paroi de fond de ladite poutre inférieure, une rainure de montage de la poutre supérieure, et ladite paroi de fond constitue la base d'appui de l'ensemble de la traverse, sur les supports de fixation d'éléments de suspension des roues avant du véhicule.

La traverse ainsi réalisée présente l'avantage de pouvoir être dimensionnée en fonction des organes moteurs et de transmission supportés par le châssis. Le montage séparé de la traverse sera par ailleurs particulièrement pratique et évitera le transfert de l'ensemble du châssis le long de la chaîne de montage.

D'autres caractéristiques et avantages de l'invention apparaîtront à la lecture d'un exemple de réalisation de la traverse de châssis en référence aux dessins annexés dans lesquels :
- la figure 1 est une vue en perspective de l'avant du châssis montrant l'emplacement de la traverse,

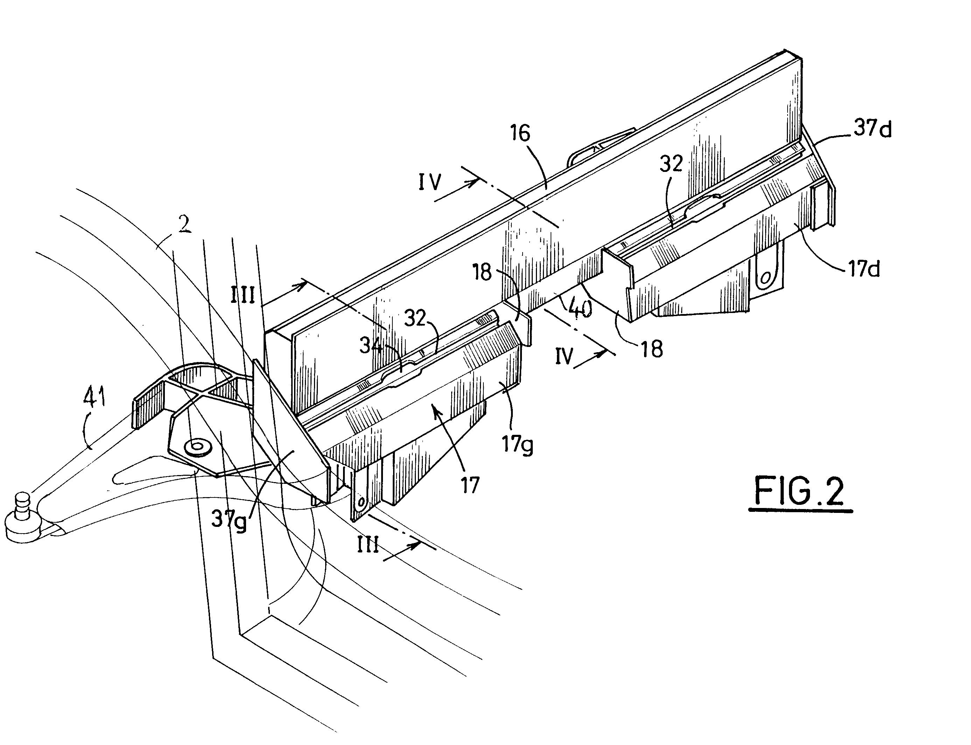

- la figure 2 est une vue en perspective du montage de la traverse du châssis,
- la figure 3 est une section transversale III-III du montage représenté à la figure 2,
- la figure 4 est une section médiane IV-IV du montage représenté à la figure 2.

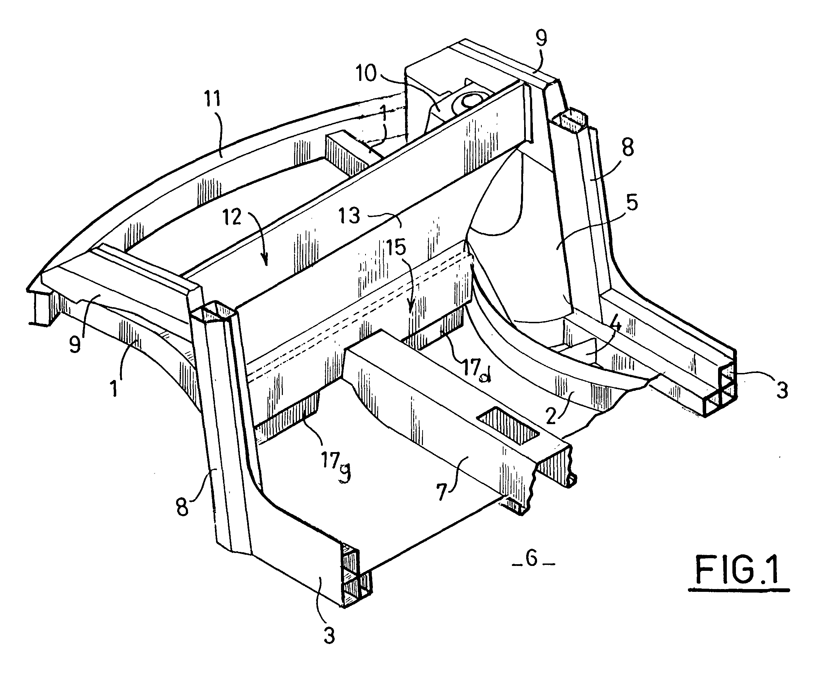

Tel que représenté à la figure 1, le châssis proprement dit, possède deux longerons avant supérieurs 1 entretoisés par une traverse 11 et qui se prolongent vers l'arrière par deux longerons inférieurs 2 respectivement assemblés à des poutres latérales 3. Les longerons inférieurs 2 et les poutres 3 sont par ailleurs entretoisés par des appuis de raccordement 4 aux passages de roues 5 du véhicule eux-mêmes en appui sur lesdits longerons inférieurs 2.

Les longerons inférieurs 2 sont recouverts par une tôle de plancher 6 rigidifiée en sa zone médiane par un tunnel longitudinal central 7. Les poutres latérales 3 sont surmontées par des montants latéraux 8 auxquels sont fixées des parois latérales 9 de maintien d'un logement 10 d'amortisseur.

Les parois latérales 9 sont également entretoisées par un tablier 12.

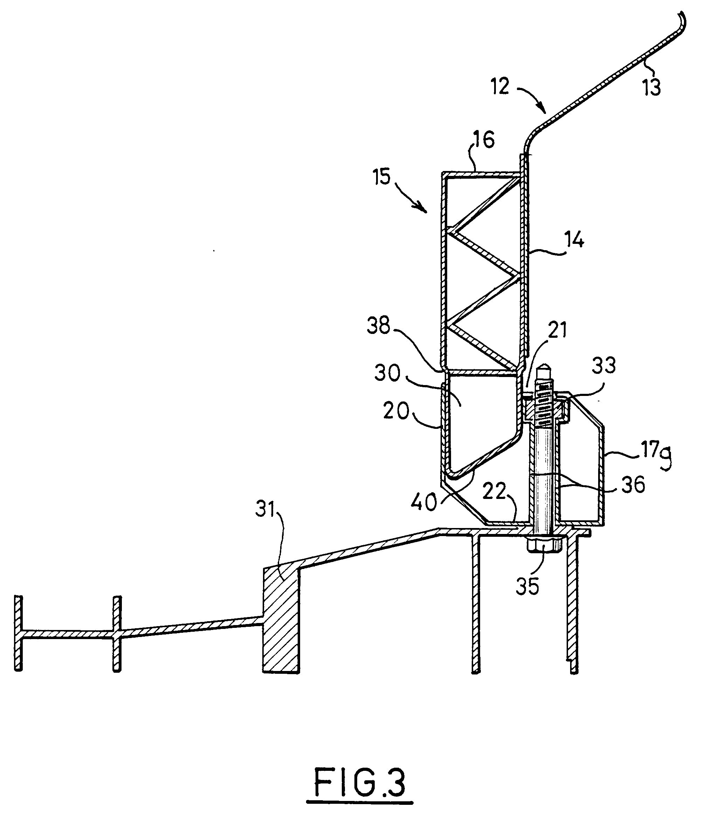

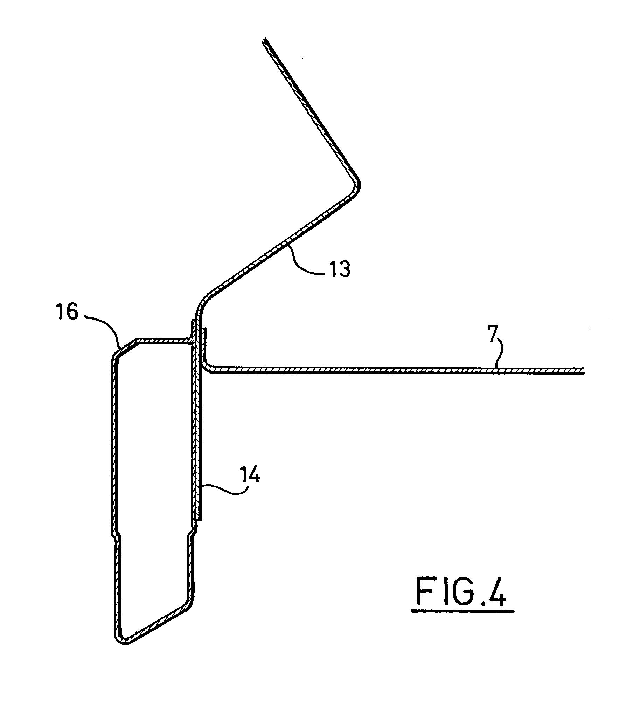

Le tablier 12 s'étend de la sorte verticalement entre les parois 9 et possède un tronçon de paroi oblique 13 que prolonge vers le bas un tronçon de paroi vertical 14. Le tronçon de paroi vertical 14 est accolé ainsi que cela est montré aux figures 3 et 4 à la traverse de châssis 15. Cette dernière est formée par une poutre transversale supérieure 16 et par une poutre transversale inférieure 17.

La poutre inférieure 17 est fractionnée en deux parties 17g et 17d respectivement en appui par l'intermédiaire de plaques de fermeture 18 sur les flancs du tunnel 7.

Selon l'invention la paroi avant 20 de la poutre inférieure 17 est écartée d'une paroi de guidage 21 et délimite avec une paroi de fond 22, une rainure de montage 30 et d'encastrement du tenon 40 de la poutre supérieure 16.

Dans le but de faciliter le montage simultané des poutres 16, 17 sur le véhicule, la paroi de fond 22 constitue la base d'appui de la traverse 15 sur les supports de fixation 31 des éléments de suspension incluant notamment les triangles de suspension 41 des roues avant du véhicule.

La fixation des parties 17g et 17d de la poutre inférieure 17 sur le support correspondant 31 s'opère au travers de la paroi de fond 22 dans une glissière longitudinale 32 de réception d'écrous de fixation 33. Les écrous 33 sont introduits dans la glissière 32 au travers d'une boutonnière 34 et reçoivent des vis d'assemblage 35 respectivement guidées entre deux parois internes de rigidification 36 de la poutre 17.

Selon une autre caractéristique de la traverse 15, la rainure de montage 30 de la poutre inférieure 17 assure également l'immobilisation verticale et le positionnement de la poutre supérieure 16 dont une paroi arrière est en appui sur le tablier 12 au niveau du tronçon de paroi vertical 14.

Ainsi que cela est montré à la figure 3 la poutre supérieure 16 possède une structure alvéolaire qui lui confère notamment une résistance aux efforts de déformation, suffisante pour empêcher des flexions longitudinales non désirées d'avant en arrière de ladite poutre 16.

Dans le but d'immobiliser simultanément les constituants de la traverse de châssis par rapport aux flancs des longerons latéraux inférieurs 2, les poutres 16, 17 sont en contact d'assemblage avec des plaques 37g, 37d dont la face extérieure constitue la zone d'appui et de fixation des longerons 2.

Par ailleurs, et en référence à la figure 3, la position correcte de la poutre 16 par rapport à la poutre inférieure 17 est réalisée par une butée de positionnement vertical 38 localisée à la racine du tenon de montage 40 de la poutre 16 dans la rainure 30.

## Revendications

1. Traverse de châssis de véhicule automobile qui limite longitudinalement un compartiment moteur, caractérisée par le fait que la traverse est formée par une poutre transversale supérieure (16) et par une poutre transversale inférieure (17) respectivement reliées à deux longerons inférieurs (2) porteurs des zones d'appui des passages de roues (5), la paroi avant (20) de la poutre inférieure (17) délimitant avec une paroi de guidage (21) et une paroi de fond (22) de la dite poutre inférieure, une rainure de montage et d'immobilisation (30), la poutre supérieure (16) étant encastrée dans ladite rainure de montage (30) et ladite paroi de fond (22) constituant la base d'appui de l'ensemble de la traverse sur les supports (31) de fixation d'éléments de suspension des roues avant du véhicule.

2. Traverse de châssis selon la revendication 1, caractérisée par le fait que la poutre inférieure (17) possède une glissière longitudinale (32) de réception d'organes de fixation, tels que des écrous (33).

3. Traverse de châssis selon l'une quelconque des revendications 1 ou 2, caractérisée par le fait qu'une paroi arrière de la poutre supérieure (16) est en appui sur un tablier (12) qui entretoise les parois latérales (9) de maintien d'un logement (10) d'amortisseur.

4. Traverse de châssis selon la revendication 3, caractérisée par le fait que la poutre inférieure (17) est fractionnée en deux parties (17g, 17d) respectivement en appui par l'intermédiaire de plaques de fermeture (18) sur les flancs d'un tunnel (7) longitudinal central.

5. Traverse de châssis selon l'une quelconque des revendications 1 à 4, caractérisée par le fait que les poutres supérieure et inférieure (16, 17) sont respectivement au contact de plaques d'assemblage (37g, 37d) dont la face extérieure constitue la zone d'appui et de fixation des longerons latéraux (2).

6. Traverse de châssis selon l'une quelconque des revendications 1, 2, 3, caractérisée par le fait que la poutre supérieure (16) possède une butée de positionnement vertical (38) de ladite poutre dans sa rainure de montage (30) et que la partie supérieure de la dite poutre (16) possède une structure alvéolaire adaptée aux efforts de déformation exercées sur ladite poutre.

## Patentansprüche

1. Chassis-Querstrebe eines Kraftfahrzeugs, die in Längsrichtung den Motorraum abschließt, wobei die Querstrebe aus einem oberen Querträger (16) und einem unteren Querträger (17) gebildet wird, die jeweils mit zwei unteren Längsträgern (2) als Träger von Stützbereichen der Radläufe (5) verbunden sind, und die Vorderwand (20) des unteren Trägers (17) mit einer Führungswand (21) und einer Bodenwand (22) des besagten unteren Trägers eine Montage- und Versteifungskehle begrenzt, dadurch gekennzeichnet, dass der obere Träger (16) in die besagte Montagekehle (30) eingesetzt ist und die besagte Bodenwand (22) die Stützbasis für die gesamte Querstrebe auf den Stützen (31) zur Befestigung der Aufhängungselemente der Vorderräder des Fahrzeugs bildet.

2. Chassis-Querstrebe nach Anspruch 1, dadurch gekennzeichnet, dass der untere Träger (17) eine in Längsrichtung verlaufende Gleitschiene für die Aufnahme der Befestigungselemente wie beispielsweise Schraubenmuttern (33) aufweist.

3. Chassis-Querstrebe nach einem der Ansprüche 1 oder 2, dadurch gekennzeichnet, dass eine Rückwand des oberen Trägers (16) auf einer Spritzwand (12) abgestützt ist, die die Seitenwände (9) zur Aufnahme eines Sitzes (10) für einen Stoßdämpfer versteift.

4. Chassis-Querstrebe nach Anspruch 3, dadurch gekennzeichnet, dass der untere Träger (17) auf zwei Teile (17g, 17d) aufgeteilt ist und jeweils über Schließplatten (18) auf den Flanken eines mittigen und in Längsrichtung verlaufenden Tunnels (7) abgestützt ist.

5. Chassis-Querstrebe nach einem der Ansprüche 1 bis 4, dadurch gekennzeichnet, dass der obere und der untere Träger (16, 17) sich jeweils im Montagekontakt mit Platten (37g, 37d) befinden, deren Außenfläche die Stütz- und Befestigungszone der seitlichen Längsträger (2) bildet.

6. Chassis-Querstrebe nach einem der Ansprüche 1, 2 3, dadurch gekennzeichnet, dass der obere Träger (16) einen Anschlag (38) für die vertikale Positionierung des besagten Trägers in seiner Montagekehle (30) hat und dass der obere Teil des besagten Trägers (16) eine wabenförmige Struktur hat, die an die Verformungsbeanspruchungen angepasst ist, die auf den besagten Träger wirken.

## Claims

1. A transverse member of an automobile vehicle chassis which longitudinally bounds an engine compartment, characterised in that the transverse member is formed by an upper transverse beam (16) and by a lower transverse beam (17) respectively connected to two lower side members (2) bearing support zones for wheel housings (5), the front wall (20) of the lower beam (17) bounding, together with a guide wall (21) and a base wall (22) of the lower beam, an assembly and locking groove (30), the upper beam (16) being embedded in the assembly groove (30) and the base wall (22) forming the support base of the transverse member assembly on the fastening supports (31) of suspension members of the front wheels of the vehicle.

2. A transverse member of a chassis as claimed in claim 1, characterised in that the lower beam (17) comprises a longitudinal slideway (32) for receiving fastening members such as nuts (33).

3. A transverse member of a chassis as claimed in any one of claims 1 or 2, characterised in that a rear wall of the upper beam (16) bears on a bulkhead (12) which braces the side walls (9) maintaining a shock absorber housing (10).

4. A transverse member of a chassis as claimed in claim 3, characterised in that the lower beam (17) is divided into two parts (17g, 17d) respectively bearing via closure plates (18) on the flanks of a central longitudinal tunnel (7).

5. A transverse member of a chassis as claimed in any one of claims 1 to 4, characterised in that the upper and lower beams (16, 17) are respectively in contact with assembly plates (37g, 37d) whose outer surface forms the bearing and fastening zone of the side members (2).

6. A transverse member of a chassis as claimed in any one of claims 1, 2, 3, characterised in that the upper beam (16) comprises a vertical positioning stop (38) for the beam in its assembly grove (30) and in that the upper portion of the beam (16) comprises a cellular structure adapted to the deformation forces exerted on that beam.
